(19) Europäisches Patentamt
European Patent Office
Office européen des brevets

(11) **EP 3 083 494 B1**

(12) **FASCICULE DE BREVET EUROPEEN**

(45) Date de publication et mention
de la délivrance du brevet:
**11.04.2018 Bulletin 2018/15**

(21) Numéro de dépôt: **14825299.2**

(22) Date de dépôt: **18.12.2014**

(51) Int Cl.:
**C01B 15/047** [(2006.01)]    **C01G 43/00** [(2006.01)]
**G21C 3/62** [(2006.01)]    **G21C 19/44** [(2006.01)]
**G21F 9/00** [(2006.01)]    **G21F 9/30** [(2006.01)]

(86) Numéro de dépôt international:
**PCT/EP2014/078400**

(87) Numéro de publication internationale:
**WO 2015/091753 (25.06.2015 Gazette 2015/25)**

(54) **PROCÉDÉ DE SYNTHÈSE D'UN PEROXYDE OU HYDROXOPEROXYDE MIXTE D'UN ACTINYLE ET D'AU MOINS UN CATION MÉTALLIQUE DI-, TRI- OU TÉTRACHARGÉ, PEROXYDE OU HYDROXOPEROXYDE MIXTE AINSI OBTENU ET LEURS APPLICATIONS**

VERFAHREN ZUR HERSTELLUNG EINES GEMISCHTEN WASSERSTOFFPEROXIDS ODER HYDROXOPEROXIDS EINES ACTINYLS UND MINDESTENS EINES DOPPELT, DREIFACH ODER VIERFACH GELADENEN METALLISCHEN KATIONS, IN DIESEM VERFAHREN HERGESTELLTES MISCHPEROXID ODER HYDROXOPEROXID UND VERWENDUNGEN DAVON

PROCESS FOR THE SYNTHESIS OF A MIXED PEROXIDE OR HYDROXO-PEROXIDE OF AN ACTINYL AND OF AT LEAST ONE DOUBLY, TRIPLY OR QUADRUPLY CHARGED METAL CATION, MIXED PEROXIDE OR HYDROXO-PEROXIDE THUS OBTAINED AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363261**

(43) Date de publication de la demande:
**26.10.2016 Bulletin 2016/43**

(73) Titulaire: **Orano Cycle**
**92400 Courbevoie (FR)**

(72) Inventeurs:
• **BLANCHARD, Florent**
**F-49124 Saint Barthelemy D'anjou (FR)**
• **ABRAHAM, Francis**
**F-59242 Genech (FR)**
• **GRANDJEAN, Stéphane**
**F-30330 Saint Marcel De Careiret (FR)**
• **VIGIER, Nicolas**
**F-77250 Moret Sur Loing (FR)**
• **HABLOT, Isabelle**
**F-78420 Carriere Sur Seine (FR)**
• **RIVENET, Murielle**
**59780 Baiseux (FR)**

(74) Mandataire: **Brevalex**
**95, rue d'Amsterdam**
**75378 Paris Cedex 8 (FR)**

(56) Documents cités:
• **KUBATKO ET AL: "Expanding the Crystal Chemistry of Uranyl Peroxides: Synthesis and Structures of Di- Triperoxodioxouranium (IV) Complexes", INORGANIC CHEMISTRY, vol. 46, no. 9, 27 mars 2007 (2007-03-27), pages 3657-3662, XP002728370, DOI: 10.1021/ic070118h cité dans la demande**
• **UNRUH ET AL: "Expanding the Crystal Chemistry of Actinyl Peroxides: .m-n2:n1 Peroxide Coordination in Trimers of U 6+ Polyhedra", INORGANIC CHEMISTRY, vol. 48, no. 6, 17 février 2009 (2009-02-17), pages 2346-2348, XP002728371, DOI: 10.1021/ic8024217 cité dans la demande**
• **BURNS ET AL: "Actinyl Peroxide Nanospheres", ANGEWANDTE CHEMIE, vol. 44, no. 14, 29 mars 2005 (2005-03-29), pages 2135-2139, XP002728369, DOI: 10.1002/anie.200462445 cité dans la demande**

• NYMAN ET AL: "Self-Assembly of Alkali-Uranyl-Peroxide Clusters", INORGANIC CHEMISTRY, vol. 49, 8 novembre 2010 (2010-11-08), pages 7748-7755, XP002728372, DOI: 10.1021/ic1005192 cité dans la demande

• SIGMON ET AL: "Uranyl-Peroxide Interactions Favor Nanocluster Self-Assembly", J. AM. CHEM. SOC., vol. 131, 30 octobre 2009 (2009-10-30), pages 16648-16649, XP002728373, DOI: 10.1021/ja907837u

**Description**

**DOMAINE TECHNIQUE**

L'invention se rapporte au domaine de la synthèse de peroxydes et d'hydroxoperoxydes d'actinyles.

Plus spécifiquement, l'invention se rapporte à un procédé de synthèse d'un peroxyde ou hydroxoperoxyde mixte d'un actinyle, typiquement d'uranyle ou de neptunyle, et d'au moins un cation dichargé, trichargé ou tétrachargé d'un métal.

Le peroxyde ou hydroxoperoxyde mixte ainsi synthétisé pouvant être ultérieurement transformé, par calcination, en un oxyde mixte d'un actinide et d'au moins un métal, l'invention se rapporte également à un procédé de synthèse d'un tel oxyde.

L'invention se rapporte en outre à un peroxyde ou hydroxoperoxyde mixte d'un actinyle et d'au moins un cation dichargé, trichargé ou tétrachargé d'un métal, ainsi qu'à son utilisation pour la préparation d'un oxyde mixte d'un actinide et d'au moins ce métal.

L'invention trouve notamment application dans la fabrication d'oxydes mixtes d'actinides propres à servir à la fabrication de pastilles de combustibles nucléaires, tels que des oxydes mixtes d'uranium et de plutonium $(U,Pu)O_2$, des oxydes mixtes d'uranium et de neptunium $(U,Np)O_2$, des oxydes mixtes d'uranium et d'américium $(U,Am)O_2$, des oxydes mixtes d'uranium et de curium $(U,Cm)O_2$, ou encore des oxydes mixtes d'uranium, d'américium et de curium $(U,Am,Cm)O_2$, ou de cibles de transmutation.

Elle trouve également application dans la décontamination d'effluents contaminés en radionucléides issus d'installations nucléaires, tels que ceux issus d'opérations d'assainissement d'installations ou de sols ou ceux issus du retraitement de combustibles nucléaires usés, notamment pour leur décontamination en lanthanides et/ou en strontium.

**ÉTAT DE LA TECHNIQUE ANTÉRIEURE**

On connaît des peroxydes d'uranyle naturels. Il s'agit de la studtite de formule $UO_a \cdot 4H_2O$ ou $(UO_2)(O_2) \cdot 4H_2O$ et de son produit de déshydratation, la métastudtite de formule $UO_4 \cdot 2H_2O$ ou $(UO_2)(O_2) \cdot 2H_2O$. Il est admis que ces deux peroxydes se forment par hydrolyse de l'eau en eau oxygénée. Ce sont les seuls peroxydes d'uranyle qui ne comprennent aucun autre cation que le cation uranium.

En laboratoire, ils peuvent être synthétisés par addition d'eau oxygénée à une solution comprenant du nitrate d'uranyle dans de l'acide nitrique ou sulfurique, à température ambiante pour la studtite et à 70°C pour la métastudtite. Ils peuvent aussi être obtenus par conversion directe de $UO_3$ ou de $U_3O_8$ par l'eau oxygénée.

On connaît, par ailleurs, des peroxydes et hydroxoperoxydes mixtes d'uranyle et de cations métalliques monochargés ($Li^+$, $Na^+$, $K^+$, $Rb^+$, $Nb^+$ et $Cs^+$) ou dichargés ($Ca^{2+}$) ainsi que des peroxydes et hydroxoperoxydes dans lesquels l'uranyle est associé à la fois à un cation métallique monochargé et à un cation métallique dichargé ($K^+$/ $Mu^{2+}$) (Nyman et al., InorganicChemistry 2010, 49, 7748-7755, référence **[1]** ; Alcock et al., Journal of the Chemical Society A: Inorganic, Physical, Theoritical 1968, 1588, référence **[2]**; Kubatko et al., InorganicChemistry 2007, 46, 3657-3662, référence **[3]**; Unruh et al., Inorganic Chemistry 2009, 48, 2346-2348, référence **[4]).**

Ces peroxydes et hydroxoperoxydes mixtes d'uranyle et de cations métalliques monochargés/dichargés sont synthétisés par des procédés dits de « synthèse directe », qui consistent typiquement à faire réagir un sel d'uranyle avec un sel ou un hydroxyde du cation métallique monochargé/dichargé en présence de peroxyde d'hydrogène.

Il se trouve que, d'une part, ces procédés ne marchent pas lorsqu'il s'agit de synthétiser des peroxydes ou hydroxoperoxydes mixtes d'uranyle et de cations métalliques trichargés ou tétrachargés et que, d'autre part, personne n'a, à ce jour, proposé un procédé alternatif qui permettrait de synthétiser de tels peroxydes ou hydroxoperoxydes.

Or, dans la mesure où les peroxydes et hydroxoperoxydes métalliques sont des composés qui sont susceptibles d'être transformés en oxydes métalliques par calcination, il serait souhaitable de pouvoir synthétiser des peroxydes et hydroxoperoxydes mixtes d'uranyle et de cations métalliques trichargés ou tétrachargés et, notamment, d'uranyle et d'actinides(III) ou (IV) de manière à produire ensuite, à partir de ces peroxydes et hydroxoperoxydes, des oxydes mixtes d'uranium et d'actinides(III) ou (IV), propres à entrer dans la fabrication de combustibles nucléaires.

Les Inventeurs se sont donc fixé pour but de fournir un procédé qui permette de synthétiser des peroxydes et hydroxoperoxydes mixtes d'uranyle et de cations métalliques trichargés ou tétrachargés.

Ils se sont aussi fixé pour but que ce procédé soit relativement simple à mettre en oeuvre et ait un coût compatible avec une exploitation à une échelle industrielle.

Or, dans le cadre de leurs travaux, les Inventeurs ont constaté que, si l'on met en contact un peroxyde ou hydroxoperoxyde mixte d'uranyle et d'au moins un cation métallique monochargé avec une solution d'un sel d'un cation métallique trichargé ou tétrachargé, il se produit, de manière tout à fait inattendue, un échange cationique entre le peroxyde ou hydroxoperoxyde et le sel en sorte que le peroxyde ou hydroxoperoxyde à cation métallique monochargé devient un peroxyde ou hydroxoperoxyde à cation métallique trichargé ou tétrachargé.

Ils ont, de plus, constaté que cet échange cationique se produit également dans le cas où le sel dont la solution est mise en contact avec le peroxyde ou hydroxoperoxyde est un sel d'un cation métallique dichargé tel qu'un sel de strontium.

Et c'est sur ces constations qu'est basée la présente Invention.

## EXPOSÉ DE L'INVENTION

L'invention a donc, en premier lieu, pour objet un procédé de synthèse d'un composé $C_1$ choisi parmi les peroxydes et hydroxoperoxydes mixtes d'un actinyle et d'au moins un cation $X_1$, dans lequel :

- l'actinyle répond à la formule $AnO_2^{q+}$ dans laquelle An est un actinide choisi parmi l'uranium et le neptunium, et q vaut 1 (quand An est du neptunium(V)) ou 2 (quand An est de l'uranium ou du neptunium(VI));
- ledit au moins un cation $X_1$ est un cation dichargé, trichargé ou tétrachargé d'un métal, à la condition toutefois que ce métal soit différent de An ;

lequel procédé comprend la réaction, dans un solvant, d'un sel dudit au moins un cation $X_1$, par exemple un nitrate, un chlorure ou un sulfate, avec un composé $C_2$ choisi parmi les peroxydes et hydroxoperoxydes mixtes de l'actinyle et d'au moins un cation $X_2$ monochargé, moyennant quoi le composé $C_2$ est converti en le composé $C_1$ par remplacement dudit au moins un cation $X_2$ par ledit au moins un cation $X_1$.

Il s'entend que tous les peroxydes et hydroxoperoxydes mixtes dont il est question dans ce qui précède et ce qui suit peuvent être sous une forme hydratée, c'est-à-dire une forme dans laquelle ils sont combinés à des molécules d'eau, ou sous une forme anhydre.

Comme précédemment indiqué, l'actinyle peut être un uranyle ou un neptunyle, préférence étant donnée à l'uranyle.

Conformément à l'invention, chaque cation $X_1$ peut être un cation de tout métal susceptible de former un cation dichargé, un cation trichargé et/ou un cation tétrachargé. Ainsi, il peut être :

- un cation d'un métal alcalino-terreux, à savoir : $Be^{2+}$, $Mu^{2+}$, $Ca^{2+}$, $Sr^{2+}$, $Ba^{2+}$ ou $Ra^{2+}$; ou
- un cation d'un métal pauvre, par exemple : $Al^{3+}$, $Ga^{3+}$, $In^{3+}$, $Sen^{2+}$, $Sn^{4+}$, $Tl^{3+}$, $Pb^{2+}$, $Pb^{4+}$ ou $Bi^{3+}$; ou
- un cation d'un métal de transition, par exemple : $Sc^{3+}$, $Ti^{4+}$, $V^{3+}$, $Cr^{3+}$, $Mn^{2+}$, $Mn^{3+}$, $Min^{4+}$, $Fe^{2+}$, $Fe^{3+}$, $Co^{2+}$, $Co^{3+}$, $Ni^{2+}$, $Cu^{2+}$, $Zen^{2+}$, $Y^{3+}$, $Zr^{4+}$, $Nb^{3+}$, $Mo^{2+}$, $Mo^{3+}$, $Mo^{4+}$, $Tc^{4+}$, $Ru^{2+}$, $Ru^{3+}$, $Ru^{4+}$, $Rh^{2+}$, $Rh^{3+}$, $Rh^{4+}$, $Pd^{2+}$, $Cd^{2+}$, $Hf^{4+}$, $Ta^{3+}$, $Ta^{4+}$, $W^{3+}$, $W^{4+}$, $Re^{2+}$, $Re^{3+}$, $Re^{4+}$, $Os^{4+}$, $Ir^{3+}$, $Ir^{4+}$, $Pt^{2+}$, $Pt^{4+}$, $Au^{3+}$ ou $Hg^{2+}$; ou
- un cation d'un lanthanide, par exemple : $La^{3+}$, $Ce^{3+}$, $Ce^{4+}$, $Pr^{3+}$, $Nd^{3+}$, $Pm^{3+}$, $Sm^{3+}$, $Eu^{3+}$, $Gd^{3+}$, $Tb^{3+}$, $Dy^{3+}$, $Ho^{3+}$, $Er^{3+}$, $Tm^{3+}$, $Yb^{3+}$ ou $Lu^{3+}$; ou encore
- un cation d'un actinide, par exemple : $Ac^{3+}$, $Th^{4+}$, $Pa^{3+}$, $Pa^{4+}$, $U^{3+}$, $U^{4+}$, $Np^{3+}$, $Np^{4+}$, $Pu^{3+}$, $Pu^{4+}$, $Am^{3+}$ ou $Cm^{3+}$.

Chaque cation $X_2$ monochargé peut, lui, être tout cation monochargé, métallique ou non métallique, monoatomique ou polyatomique. Ainsi, il peut notamment être :

- un cation d'un métal alcalin, à savoir : $Li^+$, $Na^+$, $K^+$, $Rb^+$, $Cs^+$ et $Fr^+$; ou
- un cation d'un métal de transition, par exemple : $Cu^+$, $Ag^+$, $Au^+$ et $Hg^+$; ou encore
- un cation polyatomique, par exemple : ammonium $NH_4^+$, alkyl-ammonium comme méthylammonium $(CH_3)NH_3^+$ ou éthylammonium $(C_2H_5)NH_3^+$, dialkyl-ammonium comme diméthylammonium $(CH_3)_2NH_2^+$ ou diéthylammonium $(C_2H_5)_2NH_2^+$, trialkylammonium comme triméthylammonium $(CH_3)_3NH^+$ ou triéthylammonium $(C_2H_5)_3NH^+$, tétraalkylammonium comme tétraméthylammonium $(CH_3)_4N^+$ ou tétraéthylammonium $(C_2H_5)_4N^+$, hydrazinium $N_2H_5^+$, oxonium $H_3O^+$, ou encore hydroxylammonium $NH_4OH^+$.

Conformément à l'invention, la réaction dudit au moins un cation $X_1$ avec le composé $C_2$ est, de préférence, réalisée par addition d'une solution du sel dudit au moins un cation $X_1$ au composé $C_2$ et maintien au repos du mélange réactionnel ainsi obtenu, de préférence à température ambiante, pendant un temps suffisant pour obtenir le remplacement dudit au moins un cation $X_2$ par ledit au moins un cation $X_1$.

Typiquement, 15 à 60 minutes suffisent pour conduire à une réaction quantitative.

La solution du sel dudit au moins un cation $X_1$ est avantageusement une solution aqueuse, cette solution aqueuse étant, de préférence, préparée avec de l'eau dé-ionisée pour éviter que des cations, qui pourraient être présents dans l'eau, ne perturbent le remplacement dudit au moins un cation $X_2$ par ledit au moins un cation $X_1$.

À l'issue de la réaction, le composé $C_1$ peut être récupéré, par exemple par filtration sous vide, lavé, par exemple à l'éthanol, et séché.

De préférence, le procédé selon l'invention comprend de plus une synthèse du composé $C_2$.

Cette synthèse peut être réalisée par tout procédé proposé dans la littérature pour synthétiser un peroxyde ou hydroxoperoxyde d'uranyle et d'au moins un cation métallique monochargé ou adapté d'un tel procédé.

En particulier, cette synthèse peut être réalisée par un procédé qui comprend la réaction d'une première solution aqueuse comprenant un sel de l'actinide An, par exemple un nitrate, un chlorure ou un sulfate, avec une deuxième solution aqueuse alcaline, comprenant un sel ou un hydroxyde dudit au moins un cation $X_2$ et du peroxyde d'hydrogène.

Cette réaction est, de préférence, réalisée par addition de la première solution à la deuxième, sous agitation et, avantageusement, dans un récipient maintenu à une température de l'ordre de 0 à 5°C, et maintien au repos du milieu réactionnel ainsi obtenu pendant un temps suffisant, typiquement de une à dix heures, pour obtenir la formation du composé $C_2$.

À l'issue de la réaction, le composé $C_2$ peut être récupéré, par exemple par filtration sous vide, lavé, par exemple à l'éthanol, et séché.

Selon une disposition préférée de l'invention, le composé $C_1$ répond à la formule générale (I) ci-après :

$$(X_1^{m+})_{r1}[(AnO_2^{q+})_n(O_2^{2-})_{p-x}(OH^-)_{2x}]^{(2p-qn)-} \qquad (I)$$

dans laquelle :

An et q sont tels que précédemment définis ;
m est égal à 2 (quand $X_1$ est un cation dichargé), 3 (quand $X_1$ est un cation trichargé) ou 4 (quand $X_1$ est un cation tétrachargé) ;
n est un nombre entier pair, égal ou supérieur à 2 ;
x est un nombre entier égal à 0 (quand le composé $C_1$ est un peroxyde) ou supérieur à 0 (quand le composé $C_1$ est un hydroxoperoxyde) ;
p est un nombre entier supérieur à x ; et
n, p et r1 sont tels que :

$$1{,}5 \leq p/n \leq 2 ;$$

et

$$0 < r1 = (2p - qn)/m$$

(pour respecter l'électroneutralité du composé $C_1$).

Auquel cas, le composé $C_2$ répond à la formule générale (II) ci-après :

$$(X_2^+)_{r2}[(AnO_2^{q+})_n(O_2^{2-})_{p-x}(OH^-)_{2x}]^{(2p-qn)-} \qquad (II)$$

dans laquelle :

An, q, n, x et p sont tels que précédemment définis ; et

$$0 < r2 = 2p-qn.$$

Dans le cadre de l'invention, on préfère que, dans la formule générale (I) ci-avant et, partant, dans la formule générale (II) ci-avant, n soit un nombre entier pair allant de 2 à 60 et, mieux encore, de 16 à 60 (c'est-à dire égal à 16, 18, 20, 22, 24, 26, 28, 30, 32, 34, 36, 38, 40, 42, 44, 46, 48, 50, 52, 54, 56, 58 ou 60), auquel cas le composé $C_1$ se présente sous la forme d'un cluster (ou agrégat), ouvert ou fermé, formés de n ions actinyle connectés par des ponts peroxo ou di-hydroxo.

Par ailleurs, on préfère que ledit au moins un cation $X_1$ soit un cation d'un actinide, en particulier un cation uranium (si An n'est pas lui-même de l'uranium), neptunium (si An n'est pas lui-même du neptunium), plutonium, thorium, américium ou curium, ou bien un cation d'un lanthanide, en particulier un cation néodyme, cérium, gadolinium ou samarium, et ce, indépendamment du fait que le composé $C_1$ réponde ou non à la formule générale (I) ci-avant.

Enfin, on préfère que ledit au moins un cation $X_2$ soit un cation ammonium et ce, là également, indépendamment du fait que le composé $C_2$ réponde ou non à la formule générale (II) ci-avant. Pour ce faire, il suffit par exemple d'utiliser de l'ammoniaque comme source dudit au moins un cation $X_2$, lors de la synthèse du composé $C_2$.

Comme précédemment mentionné, les peroxydes et les hydroxoperoxydes métalliques peuvent être transformés en oxydes par calcination.

Aussi, l'invention a-t-elle aussi pour objet un procédé de synthèse d'un oxyde mixte d'un actinide An choisi parmi l'uranium et le neptunium, et d'au moins un métal susceptible de former un cation dichargé, trichargé ou tétrachargé, le métal étant différent de An, lequel procédé comprend :

- la synthèse d'un peroxyde ou hydroxoperoxyde mixte d'un actinyle de formule $AnO_2^{q+}$ dans laquelle q vaut 1 ou 2, et d'au moins un cation dichargé, trichargé ou tétrachargé du métal, par un procédé tel que précédemment défini ; et
- la calcination du peroxyde ou hydroxoperoxyde ainsi synthétisé.

Cette calcination peut être réalisée dans différentes conditions selon le type d'oxyde mixte que l'on souhaite obtenir, compte-tenu de l'usage auquel celui-ci est destiné.

Ainsi, par exemple, les Inventeurs ont constaté que la calcination d'un hydroxoperoxyde mixte d'uranyle et de néodyme conduit à un oxyde mixte lorsqu'elle est effectuée à une température de l'ordre de 1300 à 1400°C et sous air, tandis qu'un oxyde mixte de stoechiométrie en oxygène différente est obtenu lorsque la calcination est effectuée à une température de l'ordre de 800 à 900°C et sous atmosphère réductrice (par exemple, $H_2/N_2$ 3/97 v/v).

Les conditions de calcination seront donc choisies en fonction de la destination de l'oxyde mixte.

Parmi les peroxydes et hydroxoperoxydes mixtes susceptibles d'être obtenus par le procédé de synthèse selon l'invention, ceux répondant à la formule générale (I) ci-avant n'ont, à la connaissance des Inventeurs, jamais été décrits dans la littérature.

Aussi, l'invention a-t-elle encore pour objet un peroxyde ou hydroxoperoxyde mixte d'un actinyle et d'au moins un cation $X_1$, dans lequel :

- l'actinyle répond à la formule $AnO_2^{q+}$ dans laquelle An est un actinide choisi parmi l'uranium et le neptunium, et q vaut 1 ou 2 ;
- ledit au moins un cation $X_1$ est un cation dichargé, trichargé ou tétrachargé d'un métal, à la condition toutefois que ce métal soit différent de An ;

lequel peroxyde ou hydroxoperoxyde répond à la formule générale (I) ci-après :

$$(X_1^{m+})_{r1}[(AnO_2^{q+})_n(O_2^{2-})_{p-x}(OH^-)_{2x}]^{(2p-qn)-} \qquad (I)$$

dans laquelle :

m est égal à 2, 3 ou 4;
n est un nombre entier pair, égal ou supérieur à 2 ;
x est un nombre entier égal ou supérieur à 0 ;
p est un nombre entier supérieur à x ; et
n, p et r1 sont tels que $1,5 \leq p/n \leq 2$ et $0 < r1 = (2p - qn)/m$.

Là également, on préfère que n soit un nombre entier pair allant de 2 à 60 et, mieux encore de 16 à 60, tout comme on préfère que ledit au moins un cation $X_1$ soit un cation d'un actinide, en particulier un cation uranium, neptunium, plutonium, thorium, américium ou curium, ou bien un cation d'un lanthanide, en particulier un cation néodyme, cérium, gadolinium ou samarium.

L'invention a, en outre, pour objet l'utilisation d'un peroxyde ou hydroxoperoxyde mixte d'un actinyle et d'au moins un cation $X_1$ dans lequel :

- l'actinyle répond à la formule $AnO_2^{q+}$ dans laquelle An est un actinide choisi parmi l'uranium et le neptunium, et q vaut 1 ou 2 ;
- ledit au moins un cation $X_1$ est un cation dichargé, trichargé ou tétrachargé d'un métal, à la condition toutefois que ce métal soit différent de An ;

lequel peroxyde ou hydroxoperoxyde est tel que défini ci-avant ;
pour la synthèse d'un oxyde mixte de l'actinide et du métal.

D'autres caractéristiques et avantages de l'invention apparaîtront mieux à la lecture du complément de description qui suit, qui se rapporte à des exemples de synthèse de peroxydes et d'hydroxoperoxydes mixtes selon l'invention ainsi que d'oxydes mixtes par calcination de ces peroxydes et hydroxoperoxydes.

Bien entendu, ces exemples ne sont donnés qu'à titre d'illustrations de l'objet de l'invention et ne constituent en aucun cas une limitation de cet objet.

**BRÈVE DESCRIPTION DES FIGURES**

La figure 1, parties A et B, illustre la structure d'un hydroxoperoxyde mixte d'uranyle(VI) et de néodyme(III) selon l'invention, telle que déterminée par diffraction des rayons X sur un monocristal de cet hydroxoperoxyde.

La figure 2, parties A, B, C et D, illustre les diffractogrammes X sur poudre d'un hydroxoperoxyde mixte d'uranyle(VI) et d'ammonium (partie A : diagramme calculé à partir de la structure; partie B : diagramme réalisé immédiatement après la synthèse ; partie C : diagramme réalisé une heure après la synthèse) et de l'hydroxoperoxyde mixte d'uranyle(VI) et de néodyme(III) dont la structure est montrée sur la figure 1 réalisé une heure après la synthèse (partie D).

La figure 3 illustre le diffractogramme X sur poudre d'un oxyde mixte d'uranium et de néodyme obtenu par calcination à 1400°C sous air de l'hydroxoperoxyde mixte d'uranyle(VI) et de néodyme(III) dont la structure est montrée sur la figure 1.

La figure 4 illustre la courbe thermogravimétrique telle qu'obtenue entre 20 et 1300°C sous air pour l'hydroxoperoxyde mixte d'uranyle(VI) et de néodyme(III) dont la structure est montrée sur la figure 1.

La figure 5 illustre le diffractogramme X en température tel qu'obtenu entre 500 et 1 100°C sous air pour l'hydroxoperoxyde mixte d'uranyle(VI) et de néodyme(III) dont la structure est montrée sur la figure 1.

La figure 6 illustre le spectre UV-visible d'une solution aqueuse préparée par dissolution dans de l'acide phosphorique concentré d'un oxyde mixte d'uranium et de néodyme obtenu par calcination à 1400°C sous air de l'hydroxoperoxyde mixte d'uranyle(VI) et de néodyme(III) dont la structure est montrée sur la figure 1.

La figure 7 illustre le diffractogramme X sur poudre d'un oxyde mixte d'uranium et de néodyme obtenu par calcination à 800°C sous atmosphère réductrice de l'hydroxoperoxyde mixte d'uranyle(VI) et de néodyme(III) dont la structure est montrée sur la figure 1.

La figure 8 illustre le diffractogramme X en température tel qu'obtenu entre 20 et 800°C sous atmosphère réductrice pour l'hydroxoperoxyde mixte d'uranyle(VI) et de néodyme(III) dont la structure est montrée sur la figure 1.

La figure 9 illustre le spectre UV-visible (courbe A) d'une solution aqueuse préparée par dissolution dans de l'acide phosphorique concentré d'un oxyde mixte d'uranium et de néodyme obtenu par calcination à 800°C sous atmosphère réductrice de l'hydroxoperoxyde mixte d'uranyle(VI) et de néodyme(III) dont la structure est montrée sur la figure 1 ; à des fins de comparaison, est également illustré sur cette figure le spectre UV-visible de la figure 6 (courbe B).

La figure 10, parties A et B, illustre la structure d'un hydroxoperoxyde mixte d'uranyle(VI) et de thorium(IV) selon l'invention, telle que déterminée par diffraction des rayons X sur un monocristal de cet hydroxoperoxyde.

La figure 11, parties A et B, illustre la structure d'un hydroxoperoxyde mixte d'uranyle(VI) et de strontium(II) selon l'invention, telle que déterminée par diffraction des rayons X sur un monocristal de cet hydroxoperoxyde.

La figure 12, parties A, B et C, illustre les diffractogrammes X sur poudre d'un peroxyde mixte d'uranyle(VI) et d'ammonium (parties A et B) et d'un peroxyde mixte d'uranyle(VI) et de néodyme(III) selon l'invention (partie C), obtenu par substitution des ions ammonium dudit peroxyde par des ions néodyme.

La figure 13 illustre le diffractogramme X sur poudre d'un oxyde mixte d'uranium et de néodyme obtenu par calcination à 1400°C sous air d'un peroxyde mixte d'uranyle(VI) et de néodyme(III) selon l'invention.

**EXPOSÉ DÉTAILLÉ DE MODES DE RÉALISATION PARTICULIERS**

**EXEMPLE 1: SYNTHÈSE D'UN HYDROXOPEROXYDE MIXTE D'URANIUM(VI) ET DE NÉODYME(III) AINSI QUE D'OXYDES MIXTES D'URANIUM ET DE NÉODYME PAR CALCINATION DE CET HYDROXOPEROXYDE**

**1.1- Synthèse de l'hydroxoperoxyde mixte d'uranyle(VI) et de néodyme(III) :**

On synthétise l'hydroxoperoxyde mixte d'uranyle(VI) et de néodyme(III)

- dénommé ci-après U32R-Nd -, de formule particulière (Ia) ci-après :

$$Nd_{40/3}[(UO_2)_{32}(O_2)_{40}(OH)_{24}] \qquad (Ia),$$

sous forme hydratée, en synthétisant tout d'abord un hydroxoperoxyde mixte d'uranyle(VI) et d'ammonium - dénommé ci-après U32R-NH4 - puis en substituant les cations ammonium de cet hydroxoperoxyde par des cations néodyme.

**\* Synthèse de l'hydroxoperoxyde U32R-NH4 :**

On prépare une première solution aqueuse de nitrate d'uranyle(VI) ($UO_2(NO_3)_2 \cdot 6H_2O$) en dissolvant 0,5 g de ce nitrate dans 6 mL d'eau dé-ionisée. Cette solution comprend 0,996 mmol d'uranium(VI).

On prépare parallèlement une deuxième solution aqueuse en mélangeant 4 mL d'une solution aqueuse comprenant 4 mol/L d'ammoniaque ($NH_4OH$ à 3 mL d'une solution aqueuse de peroxyde d'hydrogène ($H_2O_2$) à 30% v/v. La solution ainsi obtenue comprend 16 mmol d'ammoniaque et 29,37 mmol de peroxyde d'hydrogène.

On ajoute goutte à goutte la première solution à la deuxième, sous agitation et en ayant placé la première solution dans un bain de glace. Une fois l'ajout effectué, on arrête l'agitation, ce qui permet une cristallisation rapide de l'hydroxoperoxyde U32R-NH4. Au bout de 10 heures, la cristallisation est quantitative.

Le solide ainsi formé est récupéré par filtration sous vide puis lavé avec 5 mL d'éthanol.

**\* Synthèse de l'hydroxoperoxyde U32R-Nd :**

On prépare une solution aqueuse de nitrate de néodyme(III) ($Nd(NO_3)_3 \cdot 6H_2O$) en dissolvant 0,218 g de ce nitrate dans 10 mL d'eau dé-ionisée. Cette solution comprend 0,497 mmol de néodyme(III).

On verse cette solution dans un bécher contenant le solide précédemment obtenu et on laisse reposer.

Trente minutes plus tard, on récupère le solide par filtration sous vide et on le lave avec 5 mL d'éthanol. Il est formé d'une poudre et de quelques monocristaux.

La caractérisation de ce solide, qui est présentée ci-après, montre qu'il est bien constitué d'un hydroxoperoxyde mixte d'uranium(VI) et de néodyme(III).

**1.2 - Synthèse des oxydes mixtes d'uranium et de néodyme :**

On synthétise deux oxydes mixtes d'uranium et de néodyme

**-** dénommés ci-après oxydes 1 et 2 -, par calcination de l'hydroxoperoxyde U32R-Nd obtenu au point 1.1 ci-avant.

L'oxyde 1 est obtenu en réalisant cette calcination à 1400°C, sous air et pendant 12 heures (avec une rampe de montée et de descente en température de 300°C/h). Il est de formule $U_{0,71}Nd_{0,29}O_{2+\delta}$, avec ($\delta \geq 0$).

L'oxyde 2 est, lui, obtenu en réalisant la calcination à 800°C, sous atmosphère réductrice ($H_2/N_2$ 3/97 v/v, avec une rampe de montée et de descente en température de 300°C/heure mais sans palier). Il est de formule $U_{0,71}Nd_{0,29}O_{2-\delta}$, avec ($\delta \geq 0$).

**1.3 - Caractérisation des hydroxoperoxydes U32R-NH4 et de U32R-Nd :**

**\* Analyse par DRX sur monocristal :**

L'analyse par diffraction des rayons X (DRX) sur un monocristal de l'hydroxoperoxyde U32R-NH4 montre que cet hydroxoperoxyde présente une structure analogue à celle que présente l'hydroxoperoxyde d'uranyle U32R-1 décrit par Sigmon et al., Journal of the American Chemical Society 2011, 131, 16648-16649, référence [5], précitée, mais se distingue de ce dernier en ce qu'il comprend un atome d'uranium au centre de la couronne U32R.

L'analyse par DRX sur un monocristal de l'hydroxoperoxyde U32R-Nd montre, elle, que cet hydroxoperoxyde présente une structure analogue à celle que présente l'hydroxoperoxyde U32R-NH4 mais se distingue de ce dernier en ce qu'il comprend des ions $Nd^{3+}$ afin de compenser la charge anionique de la charpente en remplacement des ions ammonium.

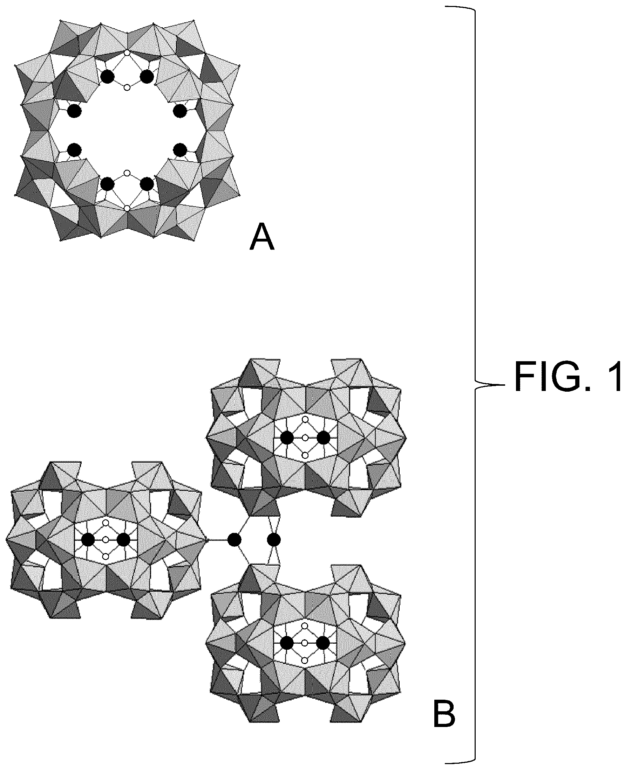

Comme visible sur la figure 1, parties A et B, dans laquelle les atomes de néodyme sont matérialisés par des sphères noires, ces atomes sont présents à la fois à l'intérieur de la couronne U32R mais également à l'extérieur de cette couronne. Par ailleurs, ils sont liés à la couronne U32R *via* les oxygènes des ions uranyle de l'hydroxoperoxyde.

Le rapport Nd/U déterminé lors de cette analyse est de 0,34.

**\* Analyse par DRX sur poudre :**

Comme signalé dans la référence **[5]** précitée pour l'hydroxoperoxyde U32R-1, l'hydroxoperoxyde U32R-NH4 perd très vite sa cristallinité.

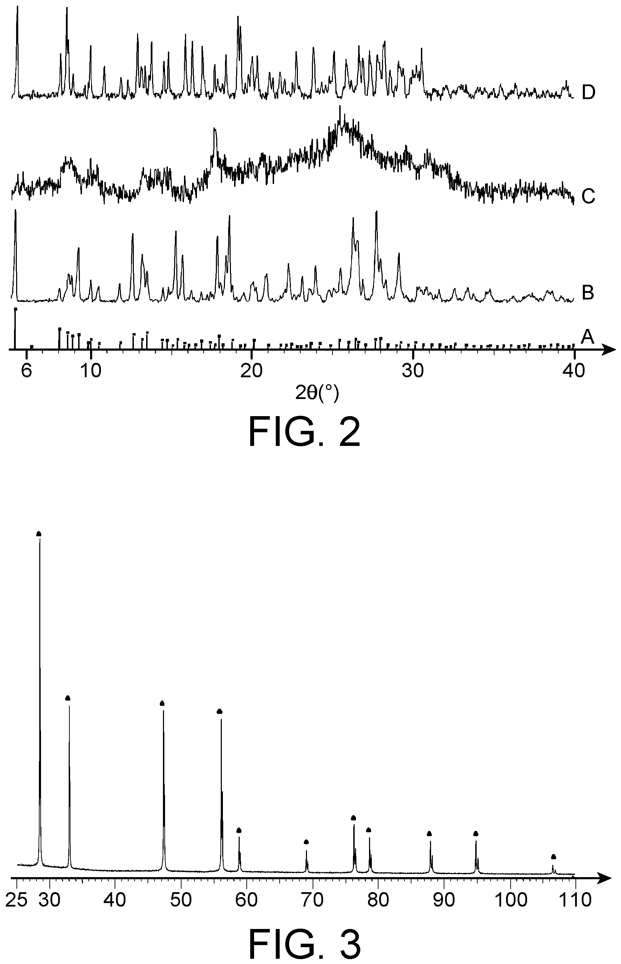

Comme visible sur la figure 2, parties A et B, une analyse par DRX sur poudre réalisée 10 minutes après l'obtention de cet hydroxoperoxyde conduit néanmoins à un diffractogramme X (partie B) correspondant à celui calculé (partie A) à partir de la structure telle que déterminée par diffraction des rayons X sur monocristal. Une heure après son obtention, l'hydroxoperoxyde U32R-NH4 est devenu quasiment amorphe (partie C).

Par contre, comme le montre la partie D de la figure 2, une analyse par DRX sur poudre de l'hydroxoperoxyde U32R-Nd met en évidence une cristallinité de ce composé qui est bien supérieure à celle de l'hydroxoperoxyde U32R-NH4 et qui est conservée au cours du temps du fait de liaisons inter-clusters faisant intervenir les ions $Nd^{3+}$ plus fortes que celles qui existent avec des ions ammonium.

* Analyses ICP-AES et EDS :

Une analyse par spectrométrie d'émission atomique couplée à un plasma induit (ICP-AES) de l'hydroxoperoxyde U32R-Nd indique un rapport Nd/U de 0,4.

Une analyse dispersive en énergie (EDS) indique, quant à elle, un rapport Nd/U de 0,42.

Ces rapports Nd/U sont légèrement supérieurs à celui obtenu par diffraction des rayons X sur monocristal et qui est de 0,34, ce qui peut s'expliquer :

- soit par la présence d'atomes de néodyme dans le monocristal occupant des sites avec un faible taux d'occupation et non localisés ;
- soit par des taux d'occupation sous-estimés ;
- soit encore par le fait que les monocristaux sont moins riches en néodyme que l'ensemble de la poudre.

**1.4 - Caractérisation de l'oxyde 1 :**

* Analyse par DRX sur poudre :

Une analyse par DRX sur poudre de l'oxyde 1 montre que cet oxyde est constitué d'une phase de structure fluorine (figure 3).

Le paramètre de maille de cet oxyde (a = 5,4356(7) Å) est légèrement inférieur à celui du dioxyde d'uranium $UO_2$ (a = 5,468(1) Å), ce qui indique qu'on est bien en présence d'un oxyde mixte.

* Analyses par ATG et par DRXHT :

La température de calcination de 1400°C sous air a été fixée suite à une étude de la décomposition thermique de l'hydroxoperoxyde U32R-Nd que l'on a réalisée par une analyse thermogravimétrique (ATG) jusqu'à 1300°C (qui correspond à la température maximale d'utilisation de l'appareil utilisé), sous air, et par une analyse par diffraction des rayons X en température (DRXHT) sous air jusqu'à 1110°C (qui correspond à la température maximale d'utilisation de l'appareil utilisé), également sous air.

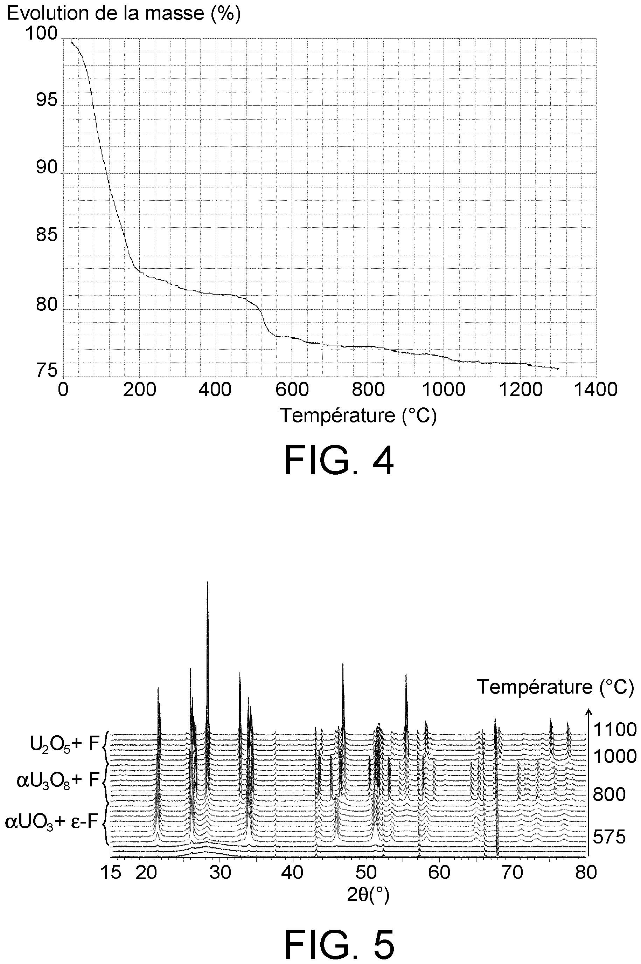

En effet, comme le montre la courbe gravimétrique de la figure 4, l'analyse ATG de cet hydroxoperoxyde révèle que sa décomposition n'est pas terminée à 1300°C, ce qui est confirmé par l'analyse par DRXHT qui précise les mécanismes de décomposition thermique jusqu'à 1 100°C.

Ainsi, comme le montre le diffractogramme X de la figure 5, $\alpha$-$UO_3$ cristallise à partir de 575°C en mélange avec une faible proportion de phase fluorine notée F sur cette figure. Puis, à 800°C, $\alpha$-$UO_3$ est transformé en $\alpha$-$U_3O_8$ et la proportion de phase fluorine croît avec la température. Enfin, $U_2O_5$ est obtenu à partir de 1 000°C, toujours en mélange avec une phase fluorine dont la quantité continue d'augmenter avec la température.

* Analyse ICP-AES :

Une analyse ICP-AES de l'oxyde 1 indique un rapport Nd/U de 0,42.

* Analyse par microsonde de Castaing :

Une cartographie d'une coupe des grains de l'oxyde 1 est réalisée par microsonde électronique ou microsonde de Castaing sur une pastille préparée par ajout de l'oxyde 1 obtenu au point 1.2 ci-avant dans une résine, suivi d'un polissage de cette pastille.

Cette cartographie confirme que cet oxyde 1 est bien un oxyde mixte d'uranium et de néodyme avec la présence simultanée d'uranium et de néodyme au sein d'un même grain.

* Analyse par spectrométrie UV-visible :

Une solution aqueuse préparée par dissolution de l'oxyde 1 dans de l'acide phosphorique concentré ($H_3PO_4$

à 65% v/v) est analysée par spectrométrie UV-visible.

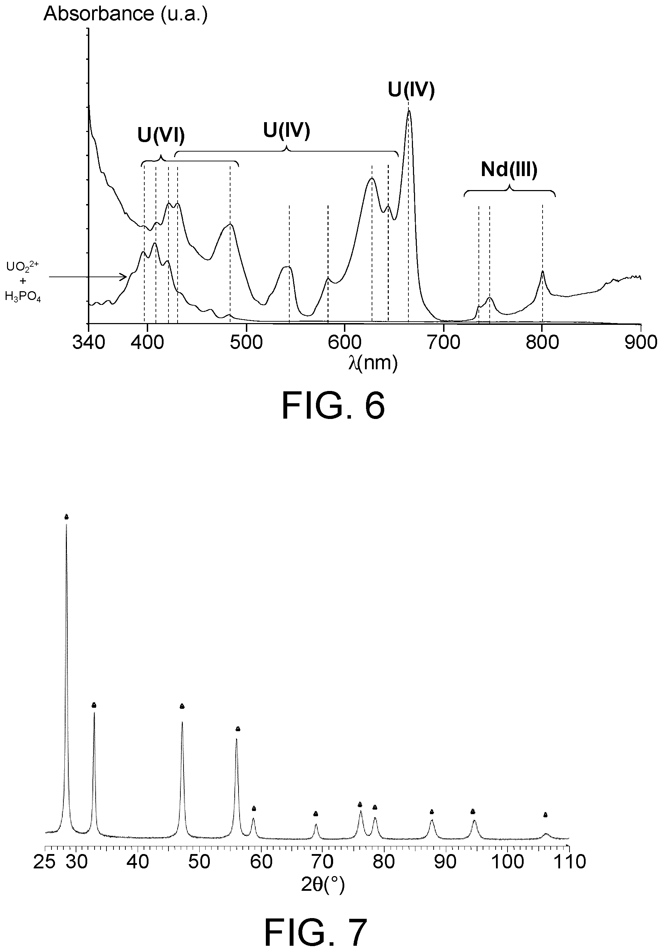

Comme le montre le spectre de la figure 6, l'uranium est présent dans cet oxyde aux degrés d'oxydation IV et VI afin de compenser la charge du néodyme dans l'oxyde de structure fluorine $U_{0,71}Nd_{0,29}O_{2+\delta}$, avec ($\delta \geq 0$).

En conclusion : par calcination à 1400°C, sous air, de l'hydroxoperoxyde U32R-Nd obtenu au point 1.1 ci-avant, on obtient une phase fluorine qui correspond à un oxyde mixte stoechiométrique de composition proche de $U_{0,71}Nd_{0,29}O_{2+\delta}$, avec ($\delta \geq 0$).

### 1.5 - Caractérisation de l'oxyde 2 :

\* Analyse par DRX sur poudre :

Une analyse par DRX sur poudre de l'oxyde 2 montre que cet oxyde est constitué d'une phase de structure fluorine (figure 7).

Le paramètre de maille de cet oxyde (a = 5,4484(4) Å) est légèrement inférieur à celui du dioxyde d'uranium $UO_2$ (a = 5,468(1) Å), ce qui indique qu'on est en présence d'un oxyde mixte.

L'élargissement des raies (par rapport à la figure 3) peut s'expliquer par le fait que l'oxyde 2 présente une granulométrie plus fine que l'oxyde 1 parce que les phénomènes de frittage sont moins présents à 800°C qu'à 1400°C. De plus, l'oxyde 2 a été obtenu par une calcination sans palier de température alors que la calcination ayant conduit à l'oxyde 1 a été réalisée avec un palier de 12 heures.

\* Analyse par DXHT :

Une analyse par DXHT de l'hydroxoperoxyde U32R-Nd est réalisée jusqu'à 800°C, sous atmosphère réductrice ($H_2/N_2$ 3/97 v/v).

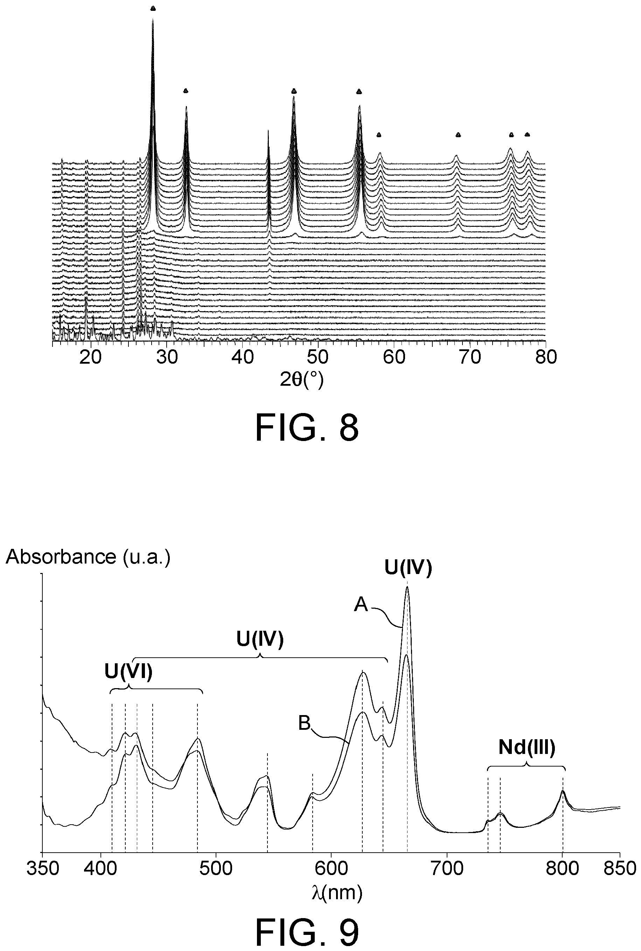

Comme le montre le diffractogramme X de la figure 8, on observe dès 500°C la cristallisation d'un oxyde de structure fluorine sous stoechiométrique $U_{0,71}Nd_{0,29}O_{2-\delta}$, avec ($\delta \geq 0$) (▲). Les raies présentes entre les valeurs de $2\theta$ comprises entre 15° et 27° et celle présente à $2\theta = 44°$ sont celles du porte-échantillon utilisé pour cette analyse, à savoir un creuset d'alumine recouvert d'une feuille d'or.

\* Analyse par spectrométrie UV-visible :

Une solution aqueuse préparé par dissolution de l'oxyde 2 dans de l'acide phosphorique concentré ($H_3PO_4$ à 65% v/v) est analysée par spectrométrie UV-visible.

Comme le montre la figure 9, qui illustre le spectre UV-visible obtenu pour cette solution (courbe A) ainsi que celui obtenu pour la solution d'oxyde 1 précédemment analysée au point 1.4 ci-avant (courbe B), l'uranium est présent dans l'oxyde aux degrés d'oxydation IV et VI comme il l'est dans l'oxyde 1.

Toutefois, la proportion d'uranium(IV) de l'oxyde 2 est largement supérieure à celle que présente l'oxyde 1.

En conclusion : par calcination à 800°C, sous atmosphère réductrice, de l'hydroxoperoxyde U32R-Nd obtenu au point 1.1 ci-avant, on obtient une phase fluorine qui correspond à un oxyde mixte non stoechiométrique de composition proche de $U_{0,71}Nd_{0,29}O_{2-\delta}$, avec ($\delta \geq 0$).

### EXEMPLE 2: SYNTHÈSE D'UN HYDROXOPEROXYDE MIXTE D'URANIUM(VI) ET DE THORIUM(IV)

### 2.1- Synthèse de l'hydroxoperoxyde mixte d'uranyle(VI) et de thorium(IV):

On synthétise l'hydroxoperoxyde mixte d'uranyle(VI) et de thorium(IV) - dénommé ci-après U32R-Th -, de formule particulière (Ib) ci-après :

$$Th_{10}[(UO_2)_{32}(O_2)_{40}(OH)_{24}] \qquad (Ib),$$

sous forme hydratée, en substituant les cations ammonium d'un hydroxoperoxyde U32R-NH4 par des cations thorium.

Pour ce faire, après avoir synthétisé l'hydroxoperoxyde U32R-NH4 en suivant le même protocole opératoire que celui décrit au point 1.1 ci-avant, on prépare une solution aqueuse de nitrate de thorium(IV) ($Th(NO_3)_4 \cdot 5H_2O$) par dissolution de 0,285 g de ce nitrate dans 10 mL d'eau dé-ionisée. Cette solution comprend 0,5 mmol de thorium(IV). On la verse dans un bécher contenant l'hydroxoperoxyde U32R-NH4 précédemment obtenu et on laisse reposer. Trente minutes plus tard, on récupère le solide par filtration sous vide et on le lave avec 5 mL d'éthanol.

La caractérisation de ce solide, qui est présentée ci-après, montre qu'il est bien constitué d'un hydroxoperoxyde mixte d'uranium(VI) et de thorium(IV).

**2.2 - Caractérisation de l'hydroxoperoxyde U32R-Th :**

L'analyse par DRX sur un monocristal de l'hydroxoperoxyde U32R-Th montre que cet hydroxoperoxyde présente une structure analogue à celle que présente l'hydroxoperoxyde U32R-NH4 mais se distingue de ce dernier en ce qu'il comprend des ions $Th^{4+}$ afin de compenser la charge anionique de la charpente en remplacement des ions ammonium.

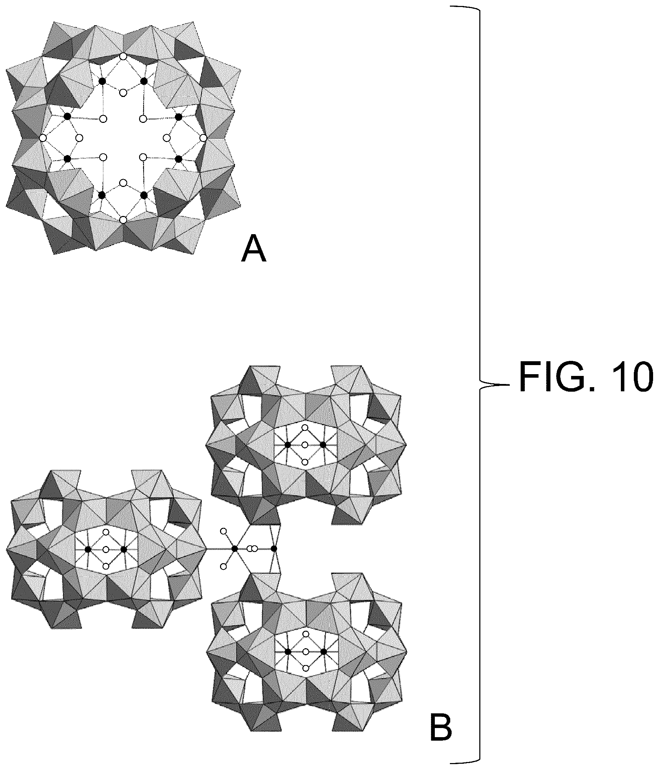

Comme visible sur la figure 10, parties A et B, dans laquelle les atomes de thorium sont matérialisés par des sphères noires, ces atomes sont présents à la fois à l'intérieur de la couronne U32R mais également à l'extérieur de cette couronne. Par ailleurs, ils sont liés à la couronne U32R *via* les oxygènes des ions uranyle de l'hydroxoperoxyde.

Le rapport Th/U déterminé lors de la résolution structurale est de 0,20.

**EXEMPLE 3: SYNTHÈSE D'UN HYDROXOPEROXYDE MIXTE D'URANIUM(VI) ET DE STRONTIUM(II)**

**3.1- Synthèse de l'hydroxoperoxyde mixte d'uranyle(VI) et de strontium(II):**

On synthétise l'hydroxoperoxyde mixte d'uranyle(VI) et de strontium(II)

- dénommé ci-après U32R-Sr-, de formule particulière (Ic) ci-après :

$$Sr_{20}[(UO_2)_{32}(O_2)_{40}(OH)_{24}] \qquad (Ic),$$

sous forme hydratée, en substituant les cations ammonium d'un hydroxoperoxyde U32R-NH4 par des cations strontium.

Pour ce faire, après avoir synthétisé l'hydroxoperoxyde U32R-NH4 en suivant le même protocole opératoire que celui décrit au point 1.1 ci-avant, on prépare une solution aqueuse de nitrate de strontium(II) $(Sr(NO_3)_4)$ par dissolution de 0,212 g de ce nitrate dans 20 mL d'eau dé-ionisée Cette solution comprend 1 mmol de strontium(II). On la verse dans un bécher contenant l'hydroxoperoxyde U32R-NH4 précédemment obtenu et on laisse reposer. Trente minutes plus tard, on récupère le solide par filtration sous vide que l'on lave avec 5 mL d'éthanol.

La caractérisation de ce solide, qui est présentée ci-après, montre qu'il est bien constitué d'un hydroxoperoxyde mixte d'uranium(VI) et de strontium(II).

**3.2 - Caractérisation de l'hydroxoperoxyde U32R-Sr :**

* Analyse par DRX sur monocristal :

L'analyse par DRX sur un monocristal de l'hydroxoperoxyde U32R-Sr montre que cet hydroxoperoxyde présente une structure analogue à celle que présente l'hydroxoperoxyde U32R-NH4 mais se distingue de ce dernier en ce qu'il comprend des ions $Sr^{2+}$ afin de compenser la charge anionique de la charpente en remplacement des ions ammonium.

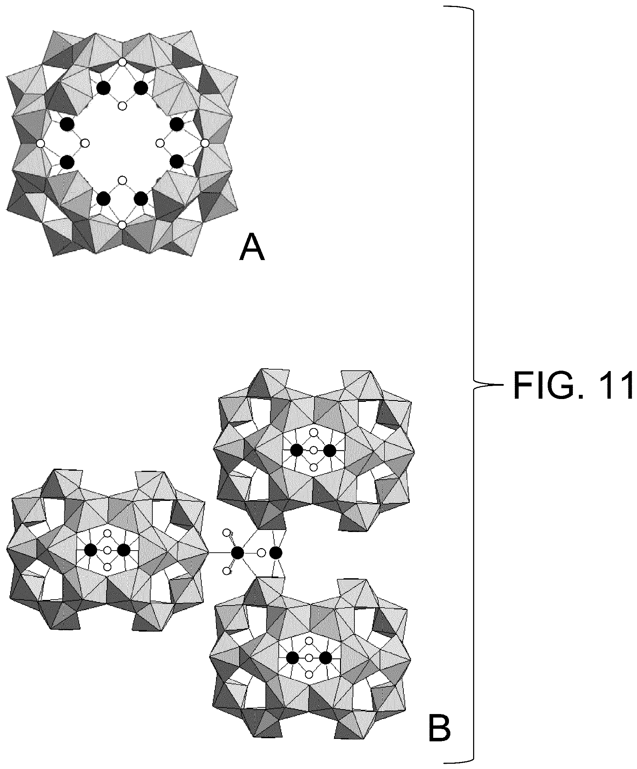

Comme visible sur la figure 11, parties A et B, dans laquelle les atomes de strontium sont matérialisés par des sphères noires, ces atomes sont présents à la fois à l'intérieur de la couronne U32R mais également à l'extérieur de cette couronne. Par ailleurs, ils sont liés à la couronne U32R *via* les oxygènes des ions uranyle de l'hydroxoperoxyde.

Le rapport Sr/U déterminé lors de la résolution structurale est de 0,42.

* Analyse ICP-AES :

Une analyse ICP-AES de l'hydroxoperoxyde U32R-Sr indique un rapport Sr/U de 0,51.

**EXEMPLE 4: SYNTHÈSE D'UN PEROXYDE MIXTE D'URANIUM(VI) ET DE NÉODYME(III) AINSI QUE D'UN OXYDE MIXTE D'URANIUM ET DE NÉODYME PAR CALCINATION DE CE PEROXYDE**

**4.1- Synthèse du peroxyde mixte d'uranyle(VI) et de néodyme(III) :**

On synthétise le peroxyde mixte d'uranyle(VI) et de néodyme(III)

- dénommé ci-après U28-Nd-, de formule particulière (Id) ci-après :

$$Nd_{20}[(UO_2)_{28}(O_2)_{42}] \qquad (Id),$$

sous forme hydratée, en synthétisant tout d'abord un peroxyde mixte d'uranyle(VI) et d'ammonium - dénommé ci-après U28-NH4 - puis en substituant les cations ammonium de ce peroxyde par des cations néodyme.

\* Synthèse du peroxyde U28-NH4 :

On prépare une première solution aqueuse comprenant 0,067 mol/L de nitrate d'uranyle(VI) ($UO_2(NO_3)_2 \cdot 6H_2O$), en dissolvant 0,625 g de ce nitrate dans 18,75 mL d'eau dé-ionisée, et 0,093 mol/L d'oxalate d'ammonium (($NH_4)_2C_2O_4 \cdot H_2O$), en dissolvant 0,250 g de cet oxalate dans le mélange précédent. La solution ainsi obtenue comprend 1,25 mmol d'uranium(VI) et 1,75 mmol d'ammonium.

On prépare parallèlement une deuxième solution aqueuse comprenant 1 mol/L de peroxyde d'hydrogène en diluant 638 $\mu$L de peroxyde d'hydrogène à 30% v/v dans 6,25 mL d'eau dé-ionisée. La solution ainsi obtenue comprend 6,25 mmol de peroxyde d'hydrogène.

On ajoute, sous agitation dans un bécher, la deuxième solution à la première. Le pH du mélange réactionnel étant d'environ 1,43, il est ajusté à 8 par ajout de 7,9 mL d'ammoniaque 1 M sous agitation. Le bécher est transféré dans un bocal hermétique contenant 33 mL de méthanol, permettant la cristallisation du peroxyde U28-NH4 par diffusion de vapeur et modification du solvant.

Après deux semaines, un solide correspondant à un mélange de poudre et de cristaux se forme au fond du bécher que l'on récupère par filtration sous vide et que l'on lave avec 5 mL d'éthanol.

\* Synthèse du peroxyde U28-Nd :

On prépare une solution aqueuse de nitrate de néodyme(III) ($Nd(NO_3)_3 \cdot 6H_2O$) en dissolvant 0,218 g de ce nitrate dans 10 mL d'eau dé-ionisée. Cette solution comprend 0,497 mmol de néodyme(III).

On verse cette solution dans un bécher contenant le peroxyde U28-NH4 précédemment obtenu et on laisse reposer.

Trente minutes plus tard, on récupère le solide par filtration sous vide que l'on lave avec 5 mL d'éthanol.

La caractérisation de ce solide, qui est présentée ci-après, montre qu'il est bien constitué d'un peroxyde mixte d'uranium(VI) et de néodyme(III).

**4.2** - **Synthèse de l'oxyde mixte d'uranium et de néodyme :**

On synthétise un oxyde mixte d'uranium et de néodyme - dénommé ci-après oxyde 3 -, en calcinant le peroxyde U28-Nd obtenu au point 4.1 ci-avant, à 1400°C, sous air et pendant 12 heures (avec une rampe de montée et de descente en température de 300°C/h).

Cet oxyde est de formule $U_{0,73}Nd_{0,27}O_{2+\delta}$, avec ($\delta \geq 0$).

**4.3 - Caractérisation des peroxydes U28-NH4 et U28-Nd :**

\* Analyse par DRX sur monocristal :

L'analyse par DRX sur un monocristal du peroxyde U28-NH4 montre que ce peroxyde présente une structure analogue à celle que présente le peroxyde d'uranyle U28 décrit par Burns et al., AngewandteChemie International Edition 2005, 44, 2135-2139, référence **[6]** : il s'agit d'une sphère à 28 atomes d'uranium qui est composée de briques tri peroxydes et dont la neutralité est assurée par les ions ammonium.

\* Analyse par DRX sur poudre :

Le peroxyde U28-NH4 perd très vite sa cristallinité.

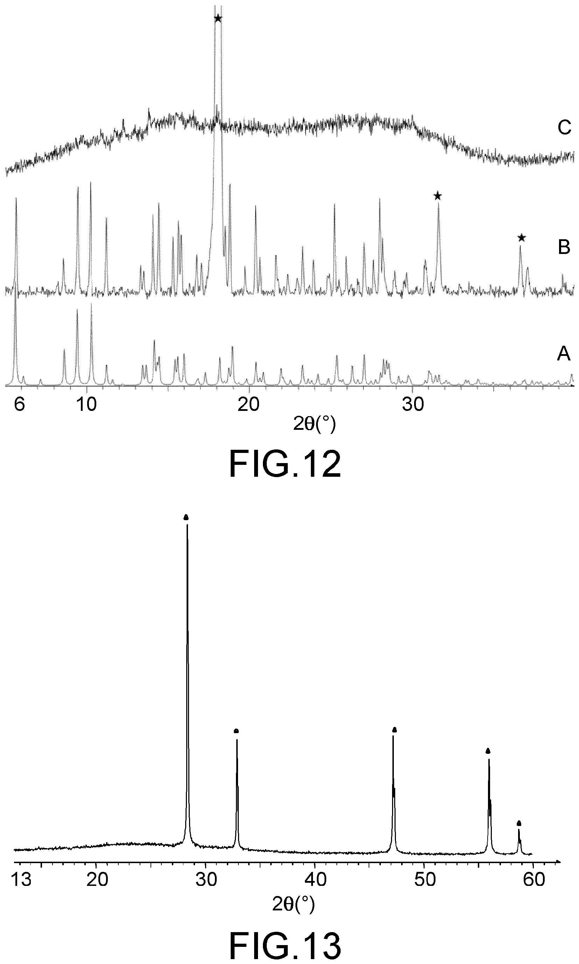

Comme visible sur la figure 12, parties A et B, une analyse par DRX sur poudre réalisée 10 minutes après l'obtention de ce peroxyde conduit néanmoins à un diffractogramme X (partie B) correspondant à celui calculé (partie A) à partir de la structure telle que déterminée par diffraction des rayons X sur monocristal. Sur la partie B, les raies matérialisées par une étoile ($\star$) sont celles du porte-échantillon en polytétrafluoroéthylène utilisé pour cette analyse.

Comme visible sur la figure 13, partie C, une analyse par DRX sur poudre du peroxyde U28-Nd montre que celui-ci est amorphe.

* <u>Analyse ICP-AES</u> :

Une analyse ICP-AES du peroxyde U28-Nd indique un rapport Nd/U de 0,369.

**4.4 - Caractérisation de l'oxyde mixte d'uranium et de néodyme :**

Une analyse par DRX sur poudre de l'oxyde 3 montre que cet oxyde est constitué d'une phase de structure fluorine (figure 13).

Le paramètre de maille de cet oxyde (a = 5,434(4) Å) est légèrement inférieur à celui du dioxyde d'uranium $UO_2$ (a = 5,468(1) Å), ce qui indique qu'on est bien en présence d'un oxyde mixte.

<u>En conclusion</u> : par calcination à 1400°C, sous air, du peroxyde U28-Nd obtenu au point 4.2 ci-avant, on obtient une phase fluorine qui correspond à un oxyde mixte de composition proche de $U_{0,73}Nd_{0,27}O_{2+\delta}$, avec ($\delta \geq 0$).

**RÉFÉRENCES CITÉES**

[1] Nyman et al., Inorganic Chemistry 2010, 49, 7748-7755

[2] Alcock et al., Journal of the Chemical Society A: Inorganic, Physical, Theroritical 1968,1588

[3] Kubatko et al., Inorganic Chemistry 2007, 46, 3657-3662

[4] Unruh et al., Inorganic Chemistry 2009, 48, 2346-2348

[5] Sigmon et al., Journal of the American Chemical Society 2011, 131, 16648-16649

[6] Burns et al., AngewandteChemie International Edition 2005, 44, 2135-2139

**Revendications**

1. Procédé de synthèse d'un composé $C_1$ choisi parmi les peroxydes et hydroxoperoxydes mixtes d'un actinyle et d'au moins un cation $X_1$, dans lequel :

   - l'actinyle répond à la formule $AnO_2^{q+}$ dans laquelle An est un actinide choisi parmi l'uranium et le neptunium, et q vaut 1 ou 2 ;
   - ledit au moins un cation $X_1$ est un cation dichargé, trichargé ou tétrachargé d'un métal, à la condition toutefois que ce métal soit différent de An ;

   lequel procédé comprend la réaction, dans un solvant, d'un sel dudit au moins un cation $X_1$ avec un composé $C_2$ choisi parmi les peroxydes et hydroxoperoxydes mixtes de l'actinyle et d'au moins un cation $X_2$ monochargé, moyennant quoi le composé $C_2$ est converti en le composé $C_1$ par remplacement dudit au moins un cation $X_2$ par ledit au moins un cation $X_1$.

2. Procédé selon la revendication 1, dans lequel ledit au moins un cation $X_1$ est un cation d'un métal alcalino-terreux, un cation d'un métal pauvre, un cation d'un métal de transition, un cation d'un lanthanide ou un cation d'un actinide.

3. Procédé selon la revendication 2, dans lequel ledit au moins un cation $X_2$ est un cation d'un métal alcalin, un cation d'un métal de transition ou un cation polyatomique.

4. Procédé selon l'une quelconque des revendications 1 à 3, dans lequel la réaction dudit au moins un cation $X_1$ avec le composé $C_2$ comprend l'addition d'une solution du sel dudit au moins un cation $X_1$ au composé $C_2$ pour obtenir un milieu réactionnel et le maintien au repos du milieu réactionnel pendant un temps suffisant pour obtenir le remplacement dudit au moins un cation $X_2$ par ledit au moins un cation $X_1$.

5. Procédé selon la revendication 4, dans lequel la solution du sel dudit au moins un cation $X_1$ est une solution aqueuse.

6. Procédé selon l'une quelconque des revendications 1 à 5, qui comprend de plus une synthèse du composé $C_2$.

7. Procédé selon la revendication 6, dans lequel la synthèse du composé $C_2$ comprend la réaction d'une première solution aqueuse comprenant un sel de l'actinide An avec une deuxième solution aqueuse alcaline, comprenant un sel ou un hydroxyde dudit au moins un cation $X_2$ et du peroxyde d'hydrogène.

**8.** Procédé selon la revendication 7, dans lequel la synthèse du composé $C_2$ comprend l'addition de la première solution à la deuxième solution, sous agitation, pour obtenir un milieu réactionnel, et le maintien au repos du milieu réactionnel pendant un temps suffisant pour obtenir la formation du composé $C_2$.

**9.** Procédé selon l'une quelconque des revendications 1 à 8, dans lequel le composé $C_1$ répond à la formule générale (I) ci-après :

$$(X_1{}^{m+})_{r1}[(AnO_2{}^{q+})_n(O_2{}^{2-})_{p-x}(OH^-)_{2x}]^{(2p-qn)-} \qquad (I)$$

dans laquelle :

An et q sont tels que précédemment définis ;
m est égal à 2, 3 ou 4;
n est un nombre entier pair, égal ou supérieur à 2 ;
x est un nombre entier égal ou supérieur à 0 ;
p est un nombre entier supérieur à x ; et
n, p et r1 sont tels que $1,5 \leq p/n \leq 2$ et $0 < r1 = (2p - qn)/m$.

**10.** Procédé selon la revendication 9, dans lequel le composé $C_2$ répond à la formule générale (II) ci-après :

$$(X_2{}^+)_{r2}[(AnO_2{}^{q+})_n(O_2{}^{2-})_{p-x}(OH^-)_{2x}]^{(2p-qn)-} \qquad (II)$$

dans laquelle :

An, q, n, x et p sont tels que précédemment définis ; et

$$0 < r2 = 2p-qn.$$

**11.** Procédé selon la revendication 9 ou la revendication 10, dans lequel n est un nombre entier pair allant de 2 à 60 et, de préférence, de 16 à 60.

**12.** Procédé selon l'une quelconque des revendications 1 à 11, dans lequel ledit au moins un cation $X_1$ est un cation d'un actinide ou d'un lanthanide.

**13.** Procédé selon l'une quelconque des revendications 1 à 11, dans lequel ledit au moins un cation $X_2$ est un cation ammonium.

**14.** Procédé de synthèse d'un oxyde mixte d'un actinide An choisi parmi l'uranium et le neptunium, et d'au moins un métal susceptible de former un cation dichargé, trichargé ou tétrachargé, le métal étant différent de An, lequel procédé comprend :

- la synthèse d'un peroxyde ou hydroxoperoxyde mixte d'un actinyle de formule $AnO_2{}^{q+}$ dans laquelle q vaut 1 ou 2, et d'au moins un cation dichargé, trichargé ou tétrachargé du métal, par un procédé tel que défini dans l'une quelconque des revendications 1 à 13 ; et
- la calcination du peroxyde ou hydroxoperoxyde ainsi synthétisé.

**15.** Peroxyde ou hydroxoperoxyde mixte d'un actinyle et d'au moins un cation $X_1$, dans lequel :

- l'actinyle répond à la formule $AnO_2{}^{q+}$ dans laquelle An est un actinide choisi parmi l'uranium et le neptunium, et q vaut 1 ou 2 ;
- ledit au moins un cation $X_1$ est un cation dichargé, trichargé ou tétrachargé d'un métal, à la condition toutefois que ce métal soit différent de An ;

lequel peroxyde ou hydroxoperoxyde répond à la formule générale (I) ci-après :

$$(X_1{}^{m+})_{r1}[(AnO_2{}^{q+})_n(O_2{}^{2-})_{p-x}(OH^-)_{2x}]^{(2p-qn)-} \qquad (I)$$

dans laquelle :

m est égal à 2, 3 ou 4;
n est un nombre entier pair, égal ou supérieur à 2 ;
x est un nombre entier égal ou supérieur à 0 ;
p est un nombre entier supérieur à x ; et
n, p et r1 sont tels que $1,5 \leq p/n \leq 2$ et $0 <r1 = (2p - qn)/m$.

**16.** Peroxyde ou hydroxoperoxyde selon la revendication 15, dans lequel n est un nombre entier pair allant de 2 à 60 et, de préférence, de 16 à 60.

**17.** Peroxyde ou hydroxoperoxyde selon la revendication 15 ou la revendication 16, dans lequel ledit au moins un cation $X_1$ est un cation d'un actinide ou d'un lanthanide.

**18.** Utilisation d'un peroxyde ou hydroxoperoxyde mixte d'un actinyle et d'au moins un cation $X_1$ dans lequel :

- l'actinyle répond à la formule $AnO_2^{q+}$ dans laquelle An est un actinide choisi parmi l'uranium et le neptunium, et q vaut 1 ou 2 ;
- ledit au moins un cation $X_1$ est un cation dichargé, trichargé ou tétrachargé d'un métal, à la condition toutefois que ce métal soit différent de An ;

lequel peroxyde ou hydroxoperoxyde est tel que défini dans l'une quelconque des revendications 15 à 17 ;
pour la synthèse d'un oxyde mixte de l'actinide et du métal.

## Patentansprüche

**1.** Verfahren zur Synthese einer Verbindung $C_1$, die aus gemischten Peroxiden und Hydroxoperoxiden eines Actinyls und mindestens eines Kations $X_1$ gewählt ist, wobei:

das Actinyl der Formel $AnO_2^{q+}$ entspricht, in welcher An ein Actinoid ist, das aus Uran und Neptunium gewählt ist, und q einen Wert von 1 oder 2 hat;
das mindestens eine Kation $X_1$ ein doppelt, dreifach oder vierfach geladenes Kation eines Metalls ist, jedoch unter der Bedingung, dass dieses Metall von An verschieden ist;
wobei das Verfahren die Reaktion, in einem Lösungsmittel, des Salzes des mindestens einen Kations $X_1$ mit einer Verbindung $C_2$ umfasst, die aus gemischten Peroxiden und Hydroxoperoxiden des Actinyls und mindestens eines einfach geladenen Kations $X_2$ gewählt ist, wodurch die Verbindung $C_2$ in die Verbindung $C_1$ umgewandelt wird, und zwar durch Austauschen des mindestens einen Kations $X_2$ durch das mindestens eine Kation $X_1$.

**2.** Verfahren nach Anspruch 1, wobei das mindestens eine Kation $X_1$ ein Kation eines Erdalkalimetalls, ein Kation eines Post-Übergangsmetalls, ein Kation eines Übergangsmetalls, ein Kation eines Lanthanoids oder ein Kation eines Actinoids ist.

**3.** Verfahren nach Anspruch 2, wobei das mindestens eine Kation $X_2$ ein Kation eines Alkalimetalls, ein Kation eines Übergangsmetalls oder ein mehratomiges Kation ist.

**4.** Verfahren nach einem der Ansprüche 1 bis 3, wobei die Reaktion des mindestens einen Kations $X_1$ mit der Verbindung $C_2$ umfasst, dass eine Lösung des Salzes des mindestens einen Kations $X_1$ der Verbindung $C_2$ zugesetzt wird, um ein Reaktionsmedium zu erhalten, und das Reaktionsmedium während einer Zeit in Ruhe gehalten wird, die ausreicht, das Ersetzen des mindestens einen Kations $X_2$ durch das mindestens eine Kation $X_1$ zu erzielen.

**5.** Verfahren nach Anspruch 4, wobei die Lösung des Salzes des mindestens einen Kations $X_1$ eine wässrige Lösung ist.

**6.** Verfahren nach einem der Ansprüche 1 bis 5, das außerdem eine Synthese der Verbindung $C_2$ umfasst.

**7.** Verfahren nach Anspruch 6, wobei die Synthese der Verbindung $C_2$ die Reaktion einer ersten wässrigen Lösung, die ein Salz des Actinoids An enthält, mit einer zweiten wässrigen alkalischen Lösung beinhaltet, die ein Salz oder ein Hydroxid des mindestens einen Kations $X_2$ und Wasserstoffperoxid enthält.

8. Verfahren nach Anspruch 7, wobei die Synthese der Verbindung $C_2$ beinhaltet, dass die erste Lösung der zweiten Lösung unter Rühren zugesetzt wird, um ein Reaktionsmedium zu erzielen, und das Reaktionsmedium während einer Zeit in Ruhe gehalten wird, die ausreicht, die Bildung der Verbindung $C_2$ zu erzielen.

9. Verfahren nach einem der Ansprüche 1 bis 8, wobei die Verbindung $C_1$ der folgenden allgemeinen Formel (I) entspricht:

$$(X_1{}^{m+})_{r1}[(AnO_2{}^{q+})_n(O_2{}^{2-})_{p-x}(OH^-)_{2x}]^{(2p-qn)-} \qquad (I)$$

in welcher:

An und q derart sind, wie zuvor definiert;
m gleich 2, 3 oder 4 ist;
n eine geradzahlige Ganzzahl gleich oder größer 2 ist;
x eine Ganzzahl gleich oder größer 0 ist;
p eine Ganzzahl größer x ist; und
n, p und r1 derart sind, dass $1{,}5 \leq p/n \leq 2$ und $0 < r1 = (2p-qn)/m$.

10. Verfahren nach Anspruch 9, wobei die Verbindung $C_2$ der folgenden allgemeinen Formel (II) entspricht:

$$(X_2{}^+)_{r2}[(AnO_2{}^{q+})_n(O_2{}^{2-})_{p-x}(OH^-)_{2x}]^{(2p-qn)-} \qquad (II)$$

in welcher:

An, q, n, x und p derart sind, wie zuvor definiert; und

$$0 < r2 = 2p-qn$$

11. Verfahren nach Anspruch 9 oder Anspruch 10, wobei n eine geradzahlige Ganzzahl von 2 bis 60, und vorzugsweise von 16 bis 60 ist.

12. Verfahren nach einem der Ansprüche 1 bis 11, wobei das mindestens eine Kation $X_1$ ein Kation eines Actinoids oder eines Lanthanoids ist.

13. Verfahren nach einem der Ansprüche 1 bis 11, wobei das mindestens eine Kation $X_2$ ein Ammonium-Kation ist.

14. Verfahren zur Synthese eines gemischten Oxids eines Actinoids An, das aus Uran und Neptunium gewählt ist, und mindestens eines Metalls, das geeignet ist, ein doppelt, dreifach oder vierfach geladenes Kation zu bilden, wobei das Metall verschieden von An ist, wobei das Verfahren beinhaltet:

die Synthese eines gemischten Peroxids oder Hydroxoperoxids eines Actinyls der Formel $AnO_2{}^{q+}$, wobei q den Wert 1 oder 2 hat, und mindestens eines doppelt, dreifach oder vierfach geladenen Kations des Metalls, mittels eines Verfahrens wie definiert in einem der Ansprüche 1 bis 13; und
die Kalzinierung des auf diese Weise synthetisierten Peroxids oder Hydroxoperoxids.

15. Gemischtes Peroxid und Hydroxoperoxid eines Actinyls und mindestens eines Kations $X_1$, wobei:

das Actinyl der Formel $AnO_2{}^{q+}$ entspricht, in welcher An ein Actinoid ist, das aus Uran und Neptunium gewählt ist, und q einen Wert von 1 oder 2 hat;
das mindestens eine Kation $X_1$ ein doppelt, dreifach oder vierfach geladenes Kation eines Metalls ist, jedoch unter der Bedingung, dass dieses Metall von An verschieden ist;
wobei das Peroxid oder Hydroxoperoxid der folgenden allgemeinen Formel (I) entspricht:

$$(X_1{}^{m+})_{r1}[(AnO_2{}^{q+})_n(O_2{}^{2-})_{p-x}(OH^-)_{2x}]^{(2p-qn)-} \qquad (I)$$

in welcher:

m gleich 2, 3 oder 4 ist;
n eine geradzahlige Ganzzahl gleich oder größer 2 ist;
x eine Ganzzahl gleich oder größer 0 ist;
p eine Ganzzahl größer x ist; und
n, p und r1 derart sind, dass $1{,}5 \leq p/n \leq 2$ und $0 < r1 = (2p-qn)/m$.

16. Peroxid oder Hydroxoperoxid nach Anspruch 15, wobei n eine geradzahlige Ganzzahl von 2 bis 60, und vorzugsweise von 16 bis 60 ist.

17. Peroxid oder Hydroxoperoxid nach Anspruch 15 oder Anspruch 16, wobei das mindestens eine Kation $X_1$ ein Kation eines Actinoids oder eines Lanthanoids ist.

18. Verwendung eines gemischten Peroxids oder Hydroxoperoxids eines Actinyls und mindestens eines Kations $X_1$, wobei:

das Actinyl der Formel $AnO_2^{q+}$ entspricht, in welcher An ein Actinoid ist, das aus Uran und Neptunium gewählt ist, und q einen Wert von 1 oder 2 hat;
das mindestens eine Kation $X_1$ ein doppelt, dreifach oder vierfach geladenes Kation eines Metalls ist, jedoch unter der Bedingung, dass dieses Metall von An verschieden ist;
wobei das Peroxid oder Hydroxoperoxid derart ist, wie in einem der Ansprüche 15 bis 17 definiert;
für die Synthese eines gemischten Oxids des Actinoids und des Metalls.

**Claims**

1. Process for synthesizing a compound $C_1$ selected from mixed peroxides and hydroxo-peroxides of an actinyl and of at least one cation $X_1$, wherein:

- the actinyl meets formula $AnO_2^{q+}$ where An is an actinide selected from uranium and neptunium, and q equals 1 or 2;
- said at least one cation $X_1$ is a doubly, triply or quadruply charged metal cation, provided however that this metal differs from An;

which process comprises the reaction in a solvent of a salt of said at least one cation $X_1$ with a compound $C_2$ selected from mixed peroxides and hydroxo-peroxides of the actinyl and of at least one singly charged cation $X_2$, whereby compound $C_2$ is converted to compound $C_1$ by replacement of said at least one cation $X_2$ by said at least one cation $X_1$.

2. Process according to claim 1, wherein said at least one cation $X_1$ is a cation of an alkaline-earth metal, a cation of a post-transition metal, a cation of a transition metal, a cation of a lanthanide or a cation of an actinide.

3. Process according to claim 2, wherein said at least one cation $X_2$ is a cation of an alkaline metal, a cation of a transition metal or a polyatomic cation.

4. Process according to any of claims 1 to 3, wherein the reaction of said at least one cation $X_1$ with compound $C_2$ comprises adding a solution of the salt of said at least one cation $X_1$ to compound $C_2$ to obtain a reaction medium and leaving the reaction medium to stand for sufficient time to obtain the replacement of said at least one cation $X_2$ by said at least one cation $X_1$.

5. Process according to claim 4, wherein the solution of the salt of said at least one cation $X_1$ is an aqueous solution.

6. Process according to any of claims 1 to 5, which further comprises a synthesis of compound $C_2$.

7. Process according to claim 6, wherein the synthesis of compound $C_2$ comprises the reaction of a first aqueous solution comprising a salt of the actinide An with an alkaline second aqueous solution comprising a salt or hydroxide of said at least one cation $X_2$ and hydrogen peroxide.

8. Process according to claim 7, wherein the synthesis of compound $C_2$ comprises adding the first solution to the second solution under agitation to obtain a reaction medium and leaving the reaction medium to stand for sufficient time to obtain the formation of compound $C_2$.

9. Process according to any of claims 1 to 8, wherein compound $C_1$ meets following general formula (I):

$$(X_1^{m+})_{r1}[(AnO_2^{q+})_n(O_2^{2-})_{p-x}(OH^-)_{2x}]^{(2p-qn)-} \qquad (I)$$

where:

An and q are such as previously defined;
m equals 2, 3 or 4;
n is an even integer of 2 or higher;
x is an integer of 0 or higher;
p is an integer higher than x; and
n, p and r1 are such that $1.5 \leq p/n \leq 2$ and $0 < r1 = (2p - qn)/m$.

10. Process according to claim 9, wherein compound $C_2$ meets following general formula (II):

$$(X_2^+)_{r2}[(AnO_2^{q+})_n(O_2^{2-})_{p-x}(OH^-)_{2x}]^{(2p-qn)-} \qquad (II)$$

where:

An, q, n, x and p are such as previously defined; and

$$0 < r2 = 2p-qn.$$

11. Process according to claim 9 or claim 10, wherein n is an even integer ranging from 2 to 60, preferably from 16 to 60.

12. Process according to any of claims 1 to 11, wherein said at least one cation $X_1$ is a cation of an actinide or lanthanide.

13. Process according to any of claims 1 to 11, wherein said at least one cation $X_2$ is an ammonium cation.

14. Process for synthesizing a mixed oxide of an actinide An selected from uranium and neptunium, and of at least one metal able to form a doubly, triply or quadruply charged metal cation, the metal differing from An, which process comprises:

- synthesizing a mixed peroxide or hydroxo-peroxide of an actinyl of formula $AnO_2^{q+}$ where q equals 1 or 2, and of at least one doubly, triply or quadruply charged metal cation, using a process such as defined in any of claims 1 to 13; and
- calcining the peroxide or hydroxo-peroxide thus synthesized.

15. Mixed peroxide or hydroxo-peroxide of an actinyl and of at least one cation $X_1$, wherein:

- the actinyl meets formula $AnO_2^{q+}$ where An is an actinide selected from uranium and neptunium, and q equals 1 or 2;
- said at least one cation $X_1$ is a doubly, triply or quadruply charged metal cation, provided however that this metal differs from An;

said peroxide or hydroxo-peroxide meets following general formula (I):

$$(X_1^{m+})_{r1}[(AnO_2^{q+})_n(O_2^{2-})_{p-x}(OH^-)_{2x}]^{(2p-qn)-} \qquad (I)$$

where:

m equals 2, 3 or 4;
n is an even integer of 2 or higher;

x is an integer of 0 or higher;
p is an integer higher than x; and
n, p and r1 are such that $1.5 \leq p/n \leq 2$ and $0 < r1 = (2p - qn)/m$.

16. Peroxide or hydroxo-peroxide according to claim 15, wherein n is an even integer ranging from 2 to 60, preferably from 16 to 60.

17. Peroxide or hydroxo-peroxide according to claim 15 or claim 16, wherein said at least one cation $X_1$ is a cation of an actinide or lanthanide.

18. Use of a mixed peroxide or hydroxo-peroxide of an actinyl and of at least one cation $X_1$, wherein:

- the actinyl meets formula $AnO_2^{q+}$ where An is an actinide selected from uranium and neptunium, and q equals 1 or 2;
- said at least one cation $X_1$ is a doubly, triply or quadruply charged metal cation, provided however that this metal differs from An;

which peroxide or hydroxo-peroxide is such as defined in any of claims 15 to 17;
for synthesizing a mixed oxide of the actinide and of the metal.

A

B

FIG. 1

# FIG. 2

# FIG. 3

Evolution de la masse (%)

FIG. 4

FIG. 5

FIG. 6

FIG. 7

FIG. 8

FIG. 9

A

FIG. 10

B

A

FIG. 11

B

FIG.12

FIG.13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **NYMAN et al.** *InorganicChemistry,* 2010, vol. 49, 7748-7755
- **ALCOCK et al.** Journal of the Chemical Society A. *Inorganic, Physical, Theoritical,* 1968, 1588
- **KUBATKO et al.** *InorganicChemistry,* 2007, (46), 3657-3662
- **UNRUH et al.** *Inorganic Chemistry,* 2009, vol. 48, 2346-2348
- **SIGMON et al.** *Journal of the American Chemical Society,* 2011, vol. 131, 16648-16649
- **BURNS et al.** AngewandteChemie International Edition. 2005, vol. 44, 2135-2139
- **NYMAN et al.** *Inorganic Chemistry,* 2010, vol. 49, 7748-7755
- **ALCOCK et al.** Inorganic, Physical, Theroritical. *Journal of the Chemical Society A,* 1968, 1588
- **KUBATKO et al.** *Inorganic Chemistry,* 2007, vol. 46, 3657-3662